## Europäisches Patentamt
## European Patent Office
## Office européen des brevets

(11) Numéro de publication: **0 210 950**
**B1**

# FASCICULE DE BREVET EUROPÉEN

(45) Date de publication du fascicule du brevet:
06.12.89

(51) Int. Cl.⁴: **A 23 G 1/00**

(21) Numéro de dépôt: 86810290.6

(22) Date de dépôt: 26.06.86

(54) Composition à base de cacao pour la préparation de boissons par dissolution dans l'eau.

(30) Priorité: 09.07.85 CH 2974/85

(43) Date de publication de la demande:
04.02.87 Bulletin 87/6

(45) Mention de la délivrance du brevet:
06.12.89 Bulletin 89/49

(84) Etats contractants désignés:
AT BE CH DE FR GB IT LI LU NL SE

(56) Documents cité:
FR-A-1 601 858
GB-A-2 080 664
US-A-2 634 210
US-A-3 615 659

(73) Titulaire: **MIDIAL S.A., 192, Avenue Charles de Gaulle, F-92200 Neuilly Sur Seine (FR)**

(84) Etats contractants désignés:
**BE CH DE FR GB IT LI LU NL**

(73) Titulaire: **BATTELLE MEMORIAL INSTITUTE, 7 route de Drize, CH- 1227 Carouge/Genève (CH)**

(84) Etats contractants désignés: **SE AT**

(72) Inventeur: **Giddey, Claude, 59, route de Chêne, CH-1206 Geneve (CH)**
Inventeur: **Bunter, Guy, 28, Avenue Vibert, CH- 1227 Carouge (CH)**

(74) Mandataire: **Dousse, Blasco, 7, route de Drize, CH-1227 Carouge/Genève (CH)**

LIBER, STOCKHOLM 1989

EP 0 210 950 B1

## Description

La présente invention a pour objet une composition de matières solides hydrosolubles ou hydrodispersibles permettant, par mélange avec de l'eau chaude ou froide, de reconstituer une boisson à base de cacao de propriétés organoleptiques améliorées. Cette composition, disponible à l'état pulvérulent et de dissolution instantanée, contient en poids, de manière générale, 5 à 30 parties de cacao soluble et 55 à 70 parties de sucre et/ou autres polysaccharides, notamment le glucose ou le lactose. De préférence, elle contient encore de 10 à 15 parties de protéines lactées, de 1 à 5 parties de matières grasses du lait et de 0,01 à 1 partie de produits aromatisants, le total de ces ingrédients formant 85 à 95 parties sur 100 du poids de la composition. Les ingrédients restants seront décrits ci-après. L'état de la technique est illustré par le document GB-A-2 080 664 (W.J. SMITH). Ce document divulgue une composition d'assaisonnement à vocation diététique comprenant des sels de potassium, notamment chlorure, citrate, phosphate et bicarbonate, des hydrates de carbone et des protéines lactées. Cette composition peut contenir des arômes, notamment de chocolat.

Le problème à résoudre lors de la recherche ayant précédé la découverte concrétisée industriellement par la présente composition, consistait à fournir une boisson cacaotée de propriétés gustatives améliorées et, notamment, une boisson instantanée à base de cacao sans lait dont les propriétés organoleptiques se rapprochent sensiblement du chocolat préparé avec du lait. On sait, en effet, que les boissons de type, "chocolat" au "petit déjeuner cacao" qui contiennent du cacao, du sucre et du lait (celui-ci étant fourni, soit par du lait en poudre, soit par apport de lait frais) offrent des caractéristiques organoleptiques, telles que goût, texture, onctuosité, et "corps" qu'il était jusqu'à présent impossible d'imiter en l'absence d'une quantité notable des constituants du lait, c'est-à-dire préparé simplement avec de l'eau.

Or, on est maintenant parvenu, par dissolution dans l'eau de la composition définie à la revendication 1, à obtenir une boisson à base de cacao dont les propriétés gustatives se rapprochent nettement mieux du cacao au lait que les produits cacaotés instantanés correspondants obtenus jusqu'à présent. On est parvenu à ce résultat avec un dosage approprié de sels minéraux alimentairement acceptables et avec un minimum de protéines d'origine lactée. Ainsi, par exemple, dans une boisson traditionnelle de cacao avec lait, on trouve normalement une quantité de substances dissoutes correspondant à environ 220 – 250 g/l. Etant donné que la portion sucres + cacao ne représente qu'environ 70 à 90 g de solides dissous, on conçoit que l'apport en matières sèches du lait entier, est relativement très élevée (100 – 150 g/l). Or, dans la présente invention, on parvient à des résultats très intéressants avec des quantités très inférieures en matière sèche totale (de l'ordre de 100 – 150 g/l) ce qui représente une économie notable de poids et de volume, même en présence des protéines lactées et matières grasses facultatives.

De préférence on utilise, pour réaliser le mélange de sels minéraux entrant dans la présente composition, des sels facilement disponibles commercialement et dont l'innocuité est reconnue car faisant partie intégrante de nombreux commestibles végétaux et animaux (légumes, fruits, lait, etc..) Une liste de tels sels figure à titre d'exemple à la revendication 2 avec les plages de proportions qu'on préfère pour chacun d'eux.

En général, il est préférable que la présente composition se présente sous forme d'un mélange intime (mouture fine) des différents composants. En effet, un tel mélange favorise la dissolution rapide de tous les ingrédients lors de la mise en contact de la composition avec la quantité requise d'eau froide ou chaude et évite que certains cations (notamment $Ca^{++}$ et $Mg^{++}$) ne soient précipités par l'apport d'anions comme $PO_4^{-3}$, $CO_3^{-2}$ et $SO_4^{-2}$. Les sels utilisés constituent, après dissolution, un mélange tampon de pH 5,8 – 6,5.

On peut encore, comme déjà indiqué ci-dessus, améliorer la présente composition en y incorporant, en addition, 1 à 5 parties de matières grasses pulvérisées, notamment des graisses de lait et des arômes comme par exemple la vanilline, le gingembre, la arômes de fruits (banane, orange, cassis, mûres, etc.) les arômes d'alcools (cognac, rhum, whisky) au taux de 0,5 à 3 g d'extrait aromatisants/100 g de composition, ainsi que de la lécithine. On peut, d'autre part, remplacer tout ou partie des sucres par d'autres édulcorants, notamment des polyalcools et des édulcorants artificiels.

En ce qui concerne l'utilisation de la présente composition pour la préparation de boissons, il suffit d'en mesurer une quantité déterminée et d'y ajouter la quantité d'eau désirée; la dissolution est très rapide et, de ce fait, la composition se prête particulièrement à un emploi dans les distributeurs automatiques. Bien entendu, elle se dissout également dans du lait ce qui, quoique cela ne soit nullement nécessaire, fournit une boisson excellente. La présente composition peut également contenir du café soluble en poudre au taux de 0,5 à 5 g pour 10 g de composition ainsi que de l'extrait de coca ou de cola.

Les exemples qui suivent illustrent l'invention.

### Exemple 1

On a préparé les compositions suivantes en mélangeant intimement les ingrédients suivants dans un mélangeur homogénéiseur:

| Ingrédients | Compositions | | | |
|---|---|---|---|---|
| (parties en poids) | 1 | 2 | 3 | 4 |
| Cacao* | 14 | 15 | 17 | 14 |
| Saccharose | 57,5 | 58,5 | 45,5 | 54 |
| Glucose | – | – | 14 | – |
| Lactose | 6,43 | 5,44 | 6 | 6,43 |

| Lécithine | 0,5 | 0,5 | 0,45 | 0,5 |
|---|---|---|---|---|
| Concentrat de protéines lactées** | 13 | 11 | 10 | 14 |
| Matière grasse en poudre*** | 3 | 3 | 2 | 4 |
| Arome (vanilline) | 0,07 | 0,06 | 0,05 | 0,07 |
| Mélange de sels minéraux**** | 5,5 | 6,5 | 5 | 7 |
| | 100 | 100 | 100 | 100 |

\* 12 % matière grasse
\*\* PL-80 (de la Société TRIBALLAT). D'autres concentrats de protéines lactées tels que les produits dénommés MIPROTIN de la Société TONI MOLKEREI peuvent également convenir
\*\*\* BUMILOLA de la Société TONI MOLKEREI (ZH)
\*\*\*\* Les mélanges de sels minéraux correspondent (pour chaque composition) aux % suivants:

| Sels (% en poids) | Compositions | | | |
|---|---|---|---|---|
| | 1 | 2 | 3 | 4 |
| KCl | 7,1 | 7,9 | 8,5 | 9,5 |
| $KH_2PO_4$ | 21 | 18 | 24 | 22 |
| $K_2CO_3$ | 3,2 | 3,3 | 4,1 | 4,1 |
| $K_2SO_4$ | 2,8 | 2,5 | 2 | 2 |
| Citrate tripotassique $H_2O$ | 18 | 15 | 16 | 14 |
| Citrate trisodique $2H_2O$ | 21 | 26 | 20,4 | 21,9 |
| $CaCl_2 \cdot 2H_2O$ | 17,5 | 18,8 | 15 | 17 |
| $MgCl_2 \cdot 6H_2O$ | 9,2 | 8,5 | 10 | 9,5 |
| Total | 100 | 100 | 100 | 100 |

Après avoir finement broyé et mélangé les divers ingrédients ci-dessus, on a préparé des boissons en dissolvant 120 à 130 g des compositions 1 à 4 dans 1 litre d'eau chaude ou froide. Ces boissons ont été présentées à des dégustateurs qui leur on trouvé un "corps" rappelant fortement les boissons à base de cacao préparées avec du lait et un goût excellent.

### Exemple 2

On a préparé les compositions 5 et 6, en mélangeant les ingrédients suivants (partier en poids)

| Ingrédients | Compositions | |
|---|---|---|
| | 5 | 6 |
| Cacao | 3,25 | 3,25 |
| Sucre | 8 | 6,5 |
| Lactose | — | 4 |
| Sels minéraux (mélange conforme à celui de la composition 3) | 1 | 1 |
| Total | 12,25 | 14,75 |

Par dissolution de ces compositions au taux de 12 à 15 g/100 ml d'eau, on a obtenu des boissons dont le "corps" était très similaire au "corps" d'une boisson identique préparée avec du lait.

### Revendications

1. Composition de matières solides solubles dans l'eau destinée à la préparation d'une boisson cacaotée chaude ou froide et contenant, en poids, 5 à 30 parties de cacao soluble et 55 à 70 parties de sucre et/ou autres polysaccharides sucrants, caractérisée par le fait que les ingrédients restants pour faire 100 parties en poids comprennent un mélange de sels minéraux contenant les cations $K^+$, $Na^+$, $Ca^{++}$, $Mg^{++}$ et les anions chlorure, phosphate, carbonate, sulfate et citrate, ce mélange formant tampon à pH 5,8 – 6,5 lors de la dissolution de la composition pour la préparation de la boisson.

2. Composition suivant la revendication 1, caractérisée par le fait que ledit mélange de sels minéraux comprend les sels suivants en % en poids: KCl 7 – 10; $KH_2PO_4$ 18 – 24; $K_2CO_3$ 3 – 5; $K_2SO_4$ 2 – 3; citrate tripotassique 14 – 18; citrate trisodique 20 – 26; $CaCl_2$ 15 – 19; $MgCl_2$ 7 – 11.

3. Composition suivant la revendication 1, caractérisée par le fait qu'elle contient encore 10 à 15 parties de protéines lactées.

4. Composition suivant la revendication 1, caractérisée par le fait qu'elle contient en outre de 1 à 5 parties de matières grasses du lait et de 0,01 à 1 partie de produits aromatisants.

5. Composition suivant la revendication 1, caractérisée par le fait que les polysaccharides édulcorants comprennent le glucose et le lactose.

6. Composition suivant la revendication 1, caractérisée par le fait qu'elle contient pour remplacer tout ou partie des polysaccharides sucrants, d'autres édulcorants, notamment des polyalcools et des édulcorants artificiels.

7. Composition suivant la revendication 1, caractérisée par le fait qu'elle contient, en outre, 0,5 à 5 g de poudre de café soluble pour 10 g de composition.

8. Composition suivant la revendication 1, caractérisée par le fait qu'elle contient, en outre, de l'extrait de coca ou de cola.

9. Utilisation de la composition suivant les revendications 1 à 8 pour la préparation d'une boisson à base de cacao, caractérisée par le fait qu'on la dissout dans l'eau à raison de 100 à 150 g/l.

## Patentansprüche

1. Wasserlösliche Zusammensetzung fester Stoffe für die Herstellung eines heißen oder kalten Kakaogetränks, das gewichtsmäßig 5 bis 30 Teile löslichen Kakao und 55 bis 70 Teile Zucker und/oder andere Polysaccharidsüßmittel enthält, dadurch gekennzeichnet, daß die restlichen zu 100 Teilen führenden Teile gewichtsmäßig ein Mineralsalzgemisch, enthaltend die Kationen $K^+$, $Na^+$, $Ca^{++}$, $Mg^{++}$ und die Anionen Chlorid, Phosphat, Carbonat, Sulfat und Zitrat, sind, wobei das Gemisch bei der Auflösung des Gemisches zur Herstellung des Getränks einen Puffer auf pH 5,8 – 6,5 bildet.

2. Zusammensetzung nach Anspruch 1, dadurch gekennzeichnet, daß das Mineralsalzgemisch folgende Salze, ausgedrückt in Gewichtsprozent, enthält: KCl 7 – 10; $KH_2PO_4$ 18 – 24; $K_2CO_3$ 3 – 5; $K_2SO_4$ 2 – 3; Trikaliumzitrat 14 – 18; Trinatriumzitrat 20 – 26; $CaCl_2$ 15 – 19; $MgCl_2$ 7 – 11.

3. Zusammensetzung nach Anspruch 1, dadurch gekennzeichnet, daß sie weiterhin 10 bis 15 Teile Milcheiweißstoffe enthält.

4. Zusammensetzung nach Anspruch 1, dadurch gekennzeichnet, daß sie außerdem 1 bis 5 Teile Milchfettstoffe und 0,01 Teil Aromastoffe enthält.

5. Zusammensetzung nach Anspruch 1, dadurch gekennzeichnet, daß die Polysaccharidsüßmittel Glukose und Laktose enthalten.

6. Zusammensetzung nach Anspruch 1, dadurch gekennzeichnet, daß sie anstelle der gesamten oder eines Teils der Polysaccharidsüßmittel andere Süßstoffe, wie Polyalkohole und künstliche Süßstoffe, enthält.

7. Zusammensetzung nach Anspruch 1, dadurch gekennzeichnet, daß sie außerdem aus 10 g der Zusammensetzung 0,5 bis 5 g lösliches Kaffeepulver enthält.

8. Zusammensetzung nach Anspruch 1, dadurch gekennzeichnet, daß sie außerdem Coca- oder Colaextrakt enthält.

9. Verwendung der Zusammensetzung nach den Ansprüchen 1 bis 8 zur Herstellung eines Getränks aus Kakaobasis, dadurch gekennzeichnet, daß man es in einer Menge von 100 bis 150 g/l in Wasser löst.

## Claims

1. Composition of water-soluble solid substances for the prepation of a hot or cold cocoa drink, comprising by weight 5 to 30 parts of soluble cocoa and 55 to 70 parts of sugar and/or other sweetening carbohydrates, characterized in that the additional ingredients to make 100 % by weight comprise a mixture of mineral salts containing the cations $K^+$, $Na^+$, $Ca^{++}$, $Mg^{++}$ and the anions chloride, phosphate, carbonate, sulfate and citrate, this mixture providing a buffering action at pH 5.8 – 6.5 when the composition is dissolved for preparing the drink.

2. Composition according to claim 1, characterized in that said mineral salts mixture comprises the following salts; in % by weight: KCl 7 – 10; $KH_2PO_4$ 18 – 24; $K_2CO_3$ 3 – 5; $K_2SO_4$ 2 – 3; tripotassium citrate 14 – 18; trisodium citrate 20 – 26; $CaCl_2$ 15 – 19; and $MgCl_2$ 7 – 11.

3. Composition according to claim 1, characterized in that it further contains 10 – 15 p.p.w. of milk proteins.

4. Composition according to claim 1, characterized in that it further contains 1 to 5 p.b.w. of milk fats and 0.01 to 1 p.b.w. of flavoring ingredients.

5. Composition according to claim 1, characterized in that the sweetening carbohydrates comprise glucose and lactose.

6. Composition according to claim 1, characterized in that it contains, as a replacement for all or part of the sweetening carbohydrates, other sweetening agents, e.g. polyalcohols and synthetic sweeteners.

7. Composition according to claim 1, characterized in that it further contains 0.5 to 5 g of pulverulent instant coffee per 10 g of the composition.

8. Composition according to claim 1, characterized in that it further contains coca or cola extracts.

9. The use of the composition according to claim 1 to 8 for preparing a cocoa drink, characterized in that 100 to 150 g/l thereof is dissolved in water.